# EUROPEAN PATENT APPLICATION

(11) **EP 1 211 652 A1**
(43) Date of publication of application: **05.06.2002**
(21) Application number: 00126082.7
(22) Date of filing: 29.11.2000
(51) Int. Cl.: G07F 7/10, G06F 17/60

(54) **Method and electronic machine for proceeding e-business by using storage media**

(71) Applicant: Lee, Cheng-Tao Paul, Taipei City (TW)
(72) Inventor: Lee, Cheng-Tao Paul, Taipei City (TW)
(74) Representative: Grünecker, Kinkeldey, Stockmair & Schwanhäusser Anwaltssozietät

(57) **Abstract**

A method and electronic machine for proceeding e-business by using storage media requires at least a plurality of client's end electronic machines, a shopping server, and a plurality of supplier's end commodity database servers for access of the electronic machines or the shopping server through the Internet. The method comprises: a) Producing a storage medium; b) Building a shopping server, which contains a plurality of commerce web pages for the client's end electronic machine to download and proceed orders; and c) Driving a browser of the electronic machine to run the shopping web page of the storage medium.

## Description

### BACKGROUND OF THE INVENTION

### 1. Field of the invention

This invention relates generally to a method for proceeding e-business by using the Internet, more particularly, it relates to a method for proceeding e-business by using storage media.

### 2. Description of the prior art

In the recent days the Internet has already entered numerous people's homes, businessmen in all fields have tried every effort in transferring usual business transaction to the Internet in different modes for sales promotion.

However, when probing into the web advertisement, it is found that most of the commodity web pages are expressed in words accompanied with static or movie-like video files that may take considerable time for a client to download to possibly ruin a trade opportunity. Besides, the web congestion is a problem pending solution as the web population still outgrows the expansion speed of the web transmission bandwidth.

### SUMMARY OF THE INVENTION

The primary object of this invention is to provide a method and electronic machine for eliminating web congestion and limitation of transmission bandwidth when proceeding e-business, and for promoting commodity advertisement quality.

In order to realize abovesaid objects, the method for proceeding e-business by using storage media of this invention requires at least a plurality of client's end electronic machines, a shopping server, and a plurality of supplier's end commodity database servers for access of the electronic machines or the shopping server through the Internet.

The method of this invention mainly comprises:
a) Producing a storage medium including at least: a plurality of video files for commodity advertisement purpose; an autorun program code for running a browser; a parameter pointing to the web address of the web pages of the shopping server for providing running instructions of the browser;
b) Building the shopping server, which should comprise at least a plurality of commerce web pages with at least a shopping web page that can be downloaded by the electronic machines; and
c) Loading the storage medium to the electronic machine to enable the latter to execute the browser's instructions by taking advantage of the autorun program code, so that the browser can find and download the shopping web pages of the shopping server according to the web address of a shopping web page, wherein the shopping web page further comprises at least: a commodity selection zone for displaying a variety of commodities, wherein each item of the commodities is provided with a corresponding advertisement video file in the storage medium; a film-playback zone for playback the advertisement video files; and a commodity specification zone for showing detailed data of commodities which are obtained through hyperlink to the accessible shopping server or the commodity database server.

For more detailed information regarding this invention together with further advantages or features thereof, at least an example of preferred embodiment will be elucidated below with reference to the annexed drawings.

### BRIEF DESCRIPTION OF THE DRAWINGS

The related drawings in connection with the detailed description of this invention, which is to be made later, are described briefly as follows, in which:
Fig. 1 shows an applicable web environment for operation of a method for proceeding e-business of this invention;
Fig. 2 shows a hardware structure of a client's end electronic machine of Fig. 1;
Fig. 3 shows a flowchart of the method of this invention;
Fig. 4A illustrates a shopping web page based on this invention;
Fig. 4B illustrates an embodiment of the shopping web page in Fig. 4A;
Fig. 4C further illustrates a procurement zone included in the shopping web page of Fig. 4A;
Fig. 4D shows an embodiment of the shopping web page shown in Fig. 4C;
Fig. 5A shows configuration of a first embodiment of this invention's storage media;
Fig. 5B shows an embodiment of the storage media of Fig. 5A;
Fig. 6A shows configuration of a second embodiment of this invention's storage media;
Fig. 6B shows an embodiment of the storage media of Fig. 6A;
Fig. 7A shows configuration of a third embodiment of this invention's storage media; and
Fig. 7B shows configuration of a fourth embodiment of this invention's storage media.

### DETAILED DESCRIPTION OF THE PREFERRED EMBODIMENT

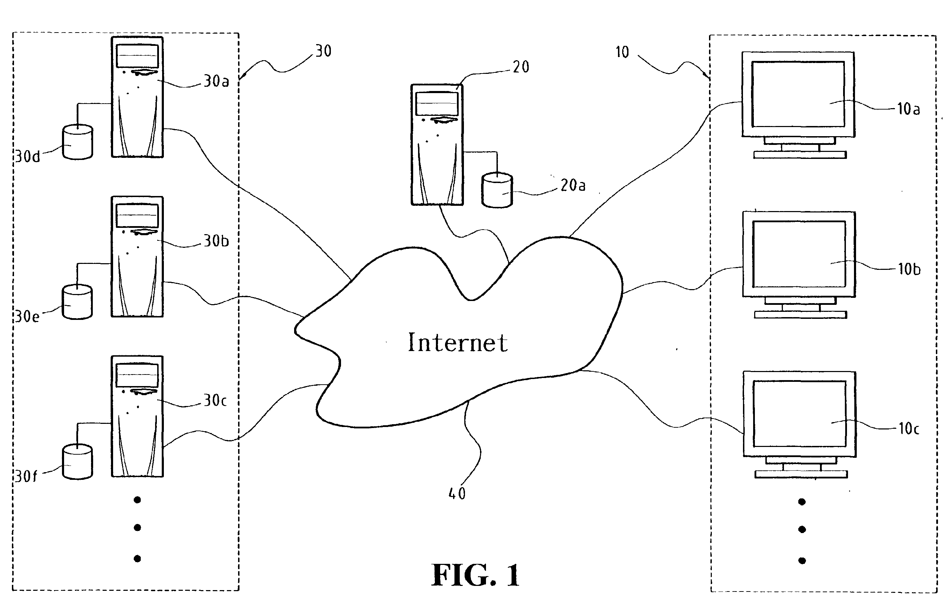

In a web environment suitable for applying a method of this invention for proceeding e-business shown in Fig. 1, the Internet **40** is communicable respectively with a shopping server **20**, a client's end electronic machine **10** including a plurality of electronic machines **10a, 10b, 10c,** and a commodity supplier's server **30** including a plurality of commodity database servers **30a**, **30b, 30c.**

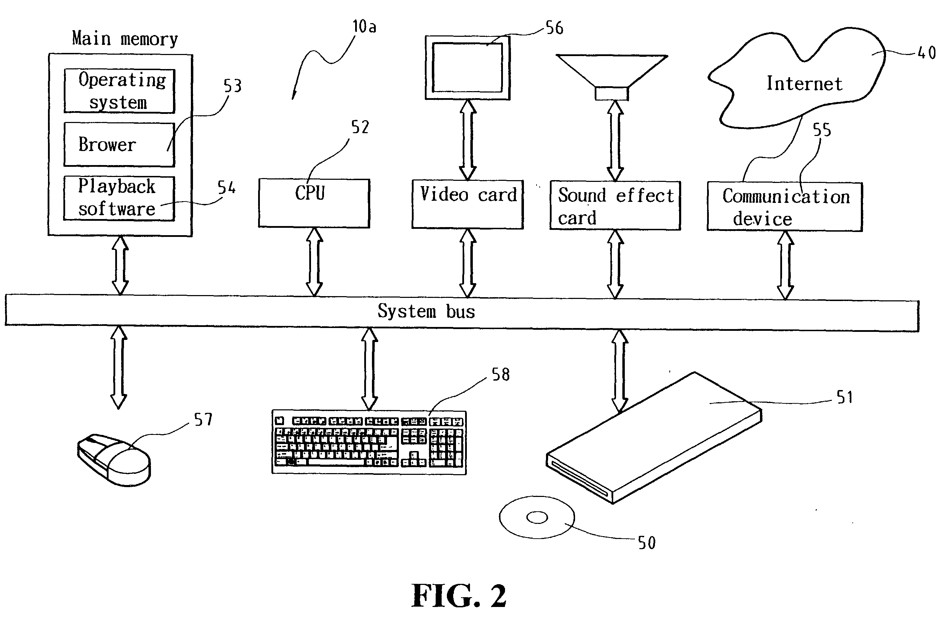

The shopping server **20** is substantially a web-based server coupled with a storage device **20a**, such as a hard disk drive (HDD) or the like, for storing a plurality of commerce web-pages and detailed commodity data so that the client's end electronic machine **10** can browse the commerce web-pages and proceed e-business based on this invention's method through the Internet **40** and a browser **53** (shown in Fig. 2).

The commodity database servers **30a, 30b, 30c** included in the commodity supplier's server **30** are provided with respective storage devices **30d, 30e, 30f** for storing detailed commodity data of different commodity suppliers, which are preferably accessible in form of hyperlink through the Internet **40**.

Fig. 2 shows a hardware structure of the client's end electronic machine **10**. In proceeding e-business with the electronic machine **10a,** the procedure is firstly to start a communication device **55** to connect the electronic machine **10a** to the Internet **40**, then put a storage medium **50** based on this invention's method into a reading device of storage medium **51,** and effect a central processing unit (CPU) **52** to validate a browser **53** for browsing the shopping web pages and for proceeding transaction with the shopping server **20**.

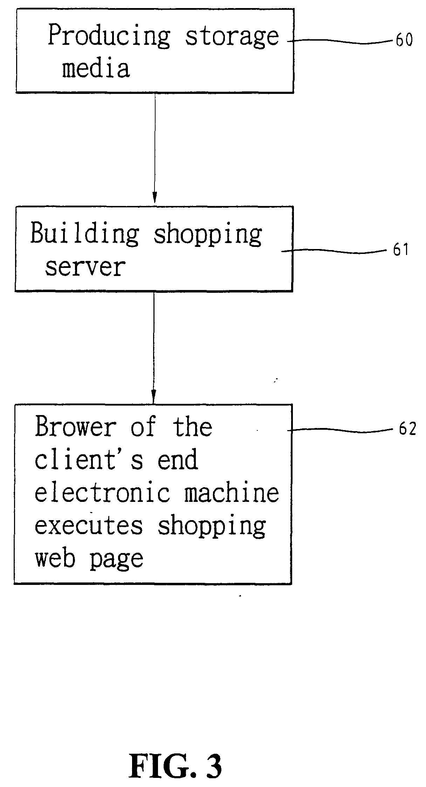

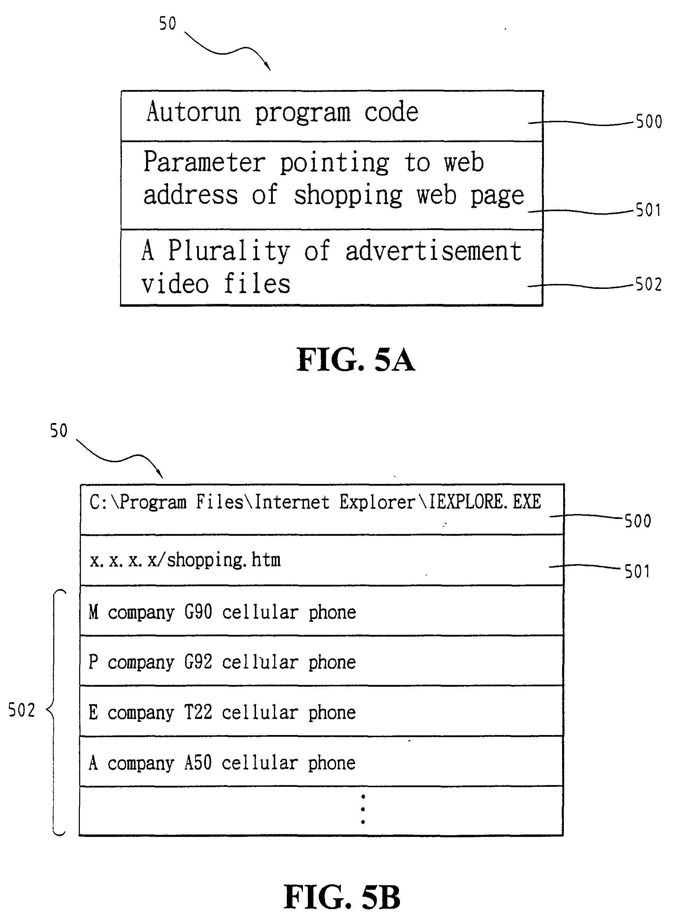

A procedure **60** shown in a flowchart of Fig. 3 based on this invention's method is to produce a storage medium **50**. In configuration of a first embodiment of this invention's storage media shown in Fig. 5A, the storage medium **50** comprises at least: a plurality of commodity advertisement video files **502**; an autorun program code **500** capable of running the browser **53**; and a parameter **501** pointing to the web address of a shopping server to enable the client's end electronic machine **10** to drive the browser **53**.

Fig. 5B shows an embodiment of the storage media of Fig. 5A, wherein a sample content of the autorun program code **500** applicable in the Microsoft Window Operating System environment is "c:\Program Files\ Internet Explorer\ IEXPLORE.EXE" for running the browser **53** and that of the parameter **501** is "x. x. x. x. / shopping.htm", wherein "x. x. x. x." represents an IP (Internet protocol) address while "shopping.htm" represents the web page of the shopping server **20**. A sample content of an advertisement video file **502** in Fig. 5B includes "Video file of (M) company G90 cellular phone", "Video file of (P) company G92 cellular phone", "Video file of (E) company T22 cellular phone", "Video file of (A) company G90 cellular phone", etc.

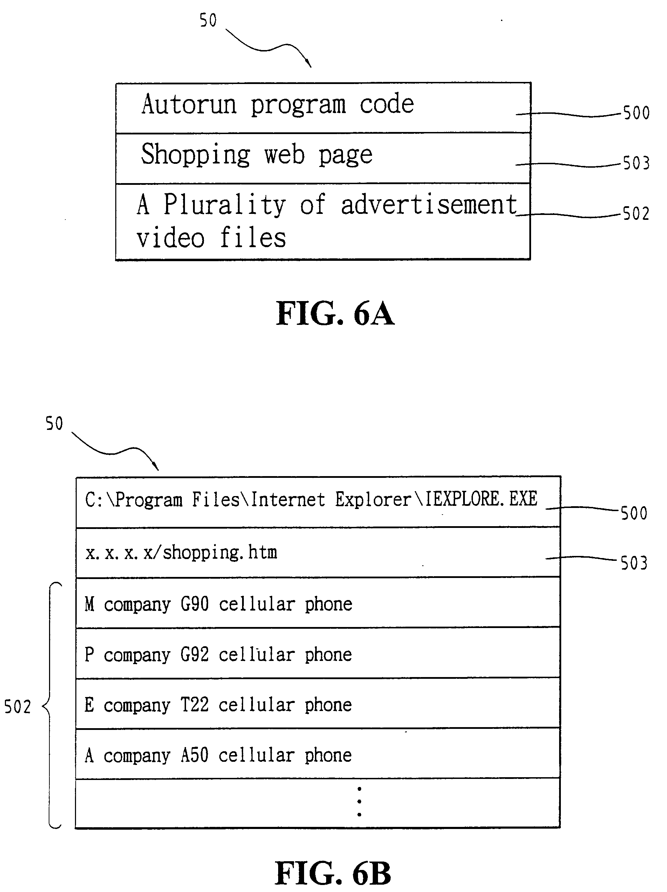

In a second embodiment of this invention's storage media shown in Fig. 6A, a storage medium **50** comprises at least: a plurality of advertisement video files **502** identical to that provided by the commodity supplier shown in Fig. 5A; an autorun program code **500** same as that in Fig. 5A; and a shopping web page **503** having contents identical to that of the web page of the shopping server **20** pointed by the parameter **501** in Fig. 5A. Besides, the autorun program code **500** of the storage medium **50** shown in Figs. 5A and 6A is a file in "autorun.inf" format operated in the Microsoft Window Operating System environment.

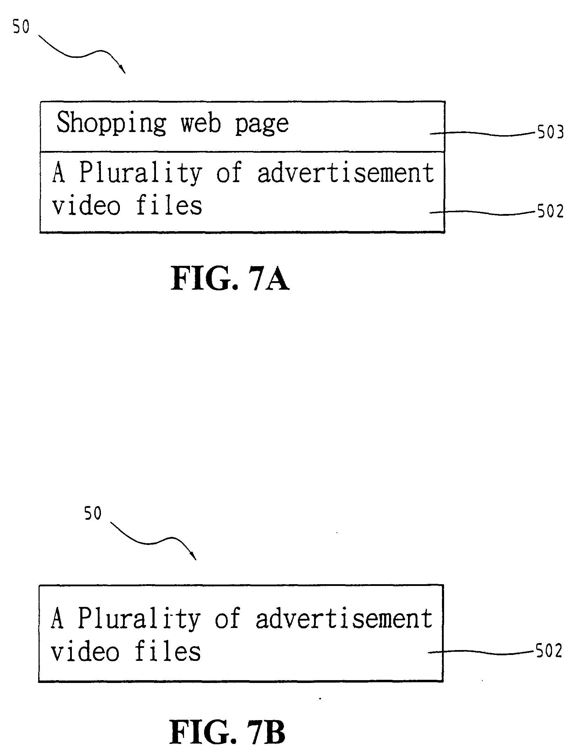

In a third embodiment of this invention's storage media shown in Fig. 7A, a storage medium **50** comprises at least: a shopping web page **503** having contents identical to that of the web page of the shopping server **20** pointed by the parameter **501** in Fig. 5A; and a plurality of advertisement video files **502** identical to that provided by the commodity supplier shown in Fig. 5A.

Fig. 7B shows configuration of a fourth embodiment of this invention's storage media, wherein a storage medium **50** comprises at least a plurality of advertisement video files **502** identical to that provided by the commodity supplier shown in Fig. 5A. All the advertisement video files **502** of Figs. 5A, 6A, 7A, and 7B in format of "AVI", "MPG", "MOV", etc., are applicable under environment of the Microsoft Window Operating System.

A procedure **61** shown in Fig. 3 is to build the shopping server **20**, which comprises at least a plurality of commerce web pages including at least a web page to be downloaded by a client's end electronic machine **10**. Moreover, the commerce web pages further comprise at least one of the shopping web page for the client's end electronic machine **10** to download and proceed subscription. A procedure **62** is to browse the shopping web pages with the browser **53** of the client's end electronic machine **10**, wherein the browser **53** will download the shopping web pages of the shopping server **20** according to the parameter **501** in case the browser **53** goes to associate with the storage medium **50** shown in Fig. 5A, or the browser **53** will read the shopping web pages **503** of the storage medium **50** directly through the reading device of storage media **51** and run the shopping web pages **503** in case the browser **53** of the client's end electronic machine **10** goes to associate with the storage media shown in Fig. 6A.

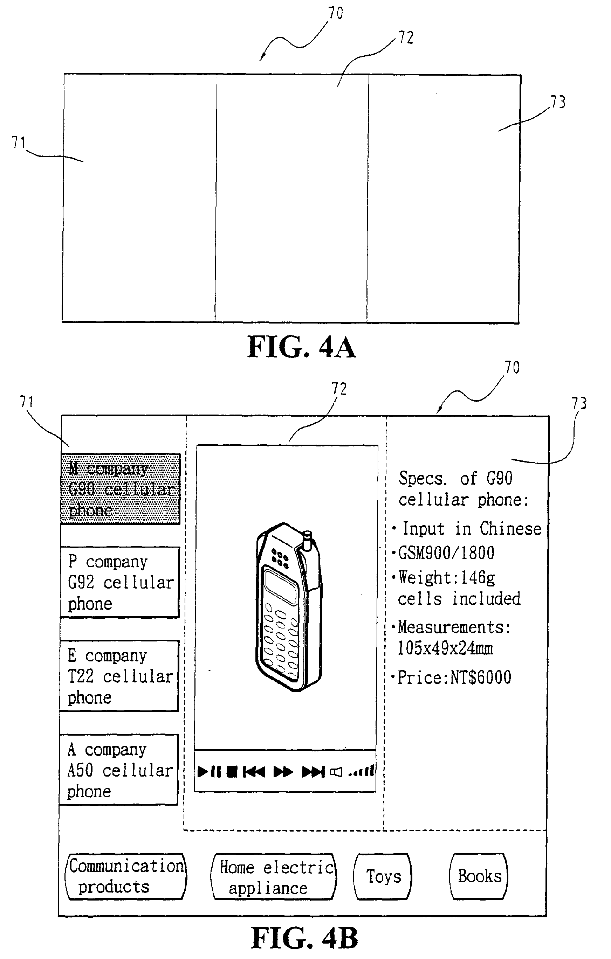

A shopping web page **70** shown in Fig. 4A is identical to the shopping web page **503** of the storage media shown in Figs. 6A and 7A and that of the shopping server **20**. The shopping web page **70** comprises at least: a commodity selection zone **71** for choosing desired items, which are provided with respective advertisement video files **502** deposited in the storage medium **50**; a film-playback zone **72** providing a display area for broadcasting related video files **502**; a commodity specification zone **73** for displaying detailed specifications of commodities obtained from the accessible shopping server **20** or commodity supplier's server **30** through hyperlink.

Fig. 4B indicates a shopping web page **70**―an embodied example of the shopping web page in Fig. 4A―which is shown in a display **56** of the client's end electronic machine **10**. The commodity selection zone **71** in Fig. 4B displays a plurality of selectable items including: "(M) company G90 cellular phone", "(P) company G92 cellular phone", "(E) company T22 cellular phone", "(A) company G90 cellular phone", "Communication products", "Home electric appliances", "Toys", "Books", etc. Each product is provided with a corresponding advertisement video file **502** deposited in the storage medium **50**, for instance, a "Video file of (M) company G90 cellular phone" and a "Video file of (P) company G92 cellular phone" are available for the "(M) company G90 cellular phone" and the "(P) company G92 cellular phone" respectively. When a client uses a mouse **57** to click an arbitrary item in the commodity selection zone **71** of the client's end electronic machine **10**, the "(M) company G90 cellular phone" for example, the shopping web page **70** will call to run a playback software **54** for playing the "Video file of (M) company G90 cellular phone" in the film-playback zone **72** shown in Fig. 4B, meanwhile, the shopping web page **70** hyperlinks to the commodity supplier's server **30** for access of detailed commodity data of the "(M) company G90 cellular phone" for example so as to display the same in the commodity specification zone **73** of Fig. 4B.

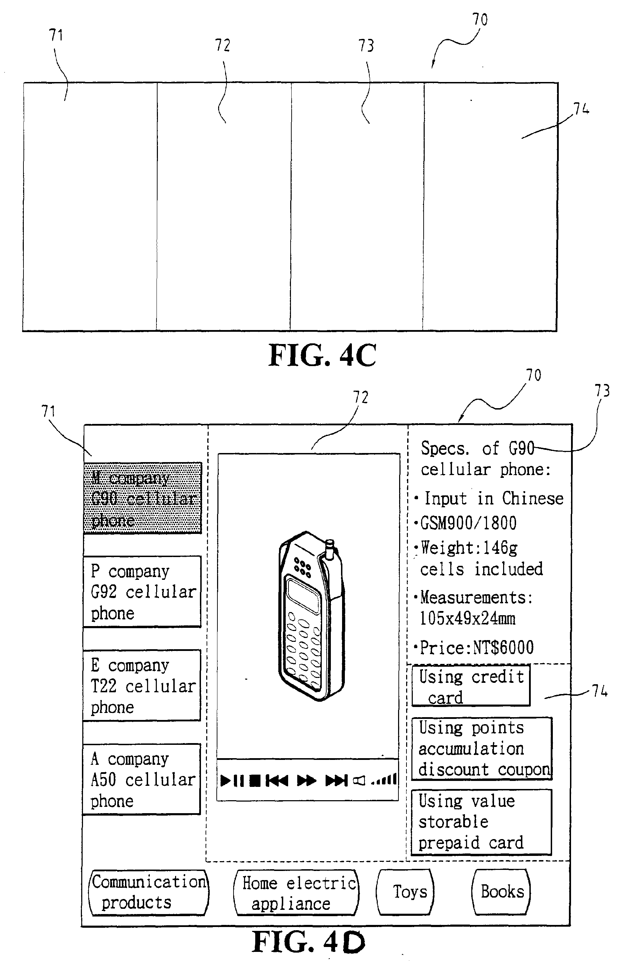

As shown in Fig. 4C, the shopping web page in Fig. 4A further comprises a procurement zone **74** in the display area for processing commodity subscriptions. Fig. 4D shows an embodiment of the shopping web page in Fig. 4C, and the procurement zone **74** in Fig. 4D displays options including "Using credit card", "Using points-accumulation discount coupon", "Using value-storable prepaid card", etc., so that the shopping web page **70** will hyperlink to a procurement page of the commerce web pages in the shopping server **20** for dealing with business transactions, such as payments or orders, when an arbitrary item in the procurement zone **74** is clicked.

The storage medium **50** based on this invention's method may be a Compact Disk (CD), a Digital Versatile Disk (DVD), a memory module, a magnetic recording storage medium, an optical recording storage medium, etc., and the associated storage medium reading device **51** in the client's end electronic machine 10 may be a CD driver, a DVD driver, a magnetic medium reading device, an optical medium reading device, etc.

All the data of the storage medium **50** based on this invention's method is stored in the storage device **20a** of the shopping server **20** as a supplementary access for the electronic machine **10** to download the data beforehand for proceeding e-business according to the method of this invention should any client fail to have secured the storage medium **50** under normal paths.

The client's end electronic machine **10** applicable to this invention's method may be an Information Appliance (IA), a Personal Computer (PC), or an embedding electronic machine with the hardware framework shown in Fig. 2. In the case of execution failure of the autorun program code **500** of the storage medium in the client's end electronic machine **10** or lacking such a mechanism, the client may use a keyboard **58** of the electronic machine **10** for input of an instruction to start the browser **53** and run the shopping web page **70**.

Moreover, the shopping server **20** built according to this invention's method further comprises a notification measure of commodity delivery for notifying a commodity supplier to deliver an ordered item to the client end.

In the above described, at least one preferred embodiment has been elucidated with reference to the drawings annexed, and it is apparent that numerous variations or modifications may be made without departing from the true spirit and scope thereof, as set forth in the claims below.

## Claims

1. A method for proceeding e-business by using storage media, requiring at least a plurality of client's end electronic machines, a shopping server, and a plurality of supplier's end commodity database servers for data access of the electronic machines or the shopping server through the Internet, the method comprising:
a) Producing a storage medium including at least: a plurality of video files for commodity advertisement purpose; an autorun program code for running a browser; a parameter pointing to the web address of the web pages of the shopping server for providing running instructions of the browser;
b) Building the shopping server, which should comprise at least a plurality of commerce web pages with at least a shopping web page that can be downloaded by the electronic machines; and
c) Loading the storage medium to the electronic machine to enable the latter to execute the browser's instructions by taking advantage of the autorun program code, so that the browser can find and download the shopping web pages of the shopping server according to the web address of a shopping web page, wherein the shopping web page further comprises at least: a commodity selection zone for displaying a variety of commodities, wherein each item of the commodities is provided with a corresponding advertisement video file in the storage medium; a film-playback zone for playback the advertisement video files; and a commodity specification zone for showing detailed data of commodities which are obtained through hyperlink to the accessible shopping server or the commodity database server.

2. The method according to claim 1, wherein the step a) further comprises a step of loading all the contents of the produced storage medium to the shopping server for the client's end electronic machine to download beforehand.

3. The method according to claim 1, wherein the plurality of commerce web pages in step b) further comprises a procurement web page for the client's end electronic machine to download for proceeding subscription process.

4. The method according to claim 1, wherein the shopping web page further comprises a procurement zone―a display area for proceeding subscription process.

5. The method according to claim 1, wherein the shopping server in step b) is further provided with a notification measure for commodity delivery so as to notify a commodity supplier to deliver commodity to a subscriber.

6. The method according to claim 1, wherein in the case of execution failure of the autorun program code in the step c) by the electronic machine, instead, a client is supposed to run the browser by input of the browser's instructions and a parameter pointing to the web address of the shopping server's web page.

7. The method according to claim 1, wherein the storage medium is a Compact Disk (CD).

8. The method according to claim 1, wherein the storage medium is a Digital Versatile Disk (DVD).

9. The method according to any claim 1, wherein the storage medium is a semi-conductor memory module.

10. The method according to claim 1, wherein the storage medium is a magnetic recording storage medium.

11. The method according to claim 1, wherein the storage medium is an optical recording storage medium.

12. A method for proceeding e-business by using storage media, requiring at least a plurality of client's end electronic machines, a shopping server, and a plurality of supplier's end commodity database servers for data access of the electronic machines or the shopping server through the Internet, the method comprising:
a) Producing a storage medium including at least: a plurality of video files for commodity advertisement purpose; an autorun program code for running a browser, a shopping web page comprising at least a commodity selection zone for choosing desired items, which are provided with respective advertisement video files deposited in the storage medium; a film-playback zone providing a display area for playback related video files; a commodity specification zone for displaying detailed specifications of commodities obtained from the accessible shopping server or commodity supplier's server through hyperlink;
b) Building the shopping server, which should comprise at least a plurality of commerce web pages for the electronic machine to download and proceed subscription process; and
c) Loading the storage medium to the electronic machine to enable the latter to execute the browser's instructions by taking advantage of the autorun program code, so that the browser can execute the shopping web pages and thereby hyperlink to the shopping server.

13. The method according to claim 12, wherein the step a) further comprises a step of loading all the contents of the produced storage medium to the shopping server for the client's end electronic machine to download beforehand.

14. The method according to claim 12, wherein the plurality of commerce web pages in step b) further comprises a procurement web page for the client's end electronic machine to download for proceeding subscription process.

15. The method according to claim 12, wherein the shopping web page further comprises a procurement zone ― a display area for proceeding subscription process.

16. The method according to claim 12, wherein the shopping server in step b) is further provided with a notification measure for commodity delivery so as to notify a commodity supplier to deliver commodity to a subscriber.

17. The method according to claim12, wherein in the case of execution failure of the autorun program code in the step c) by the electronic machine, instead, a client is supposed to run the browser by input of the browser's instructions and a parameter pointing to the web address of the shopping server's web page.

18. The method according to claims 12, wherein the storage medium is a Compact Disk (CD).

19. The method according to claim 12, wherein the storage medium is a Digital Versatile Disk (DVD).

20. The method according to claim 12, wherein the storage medium is a semi-conductor memory module.

21. The method according to claim 12, wherein the storage medium is a magnetic recording storage medium.

22. The method according to claim 12, wherein the storage medium is an optical recording storage medium.

23. A method for proceeding e-business by using storage media, requiring at least a plurality of client's end electronic machines, a shopping server, and a plurality of supplier's end commodity database servers for data access of the electronic machines or the shopping server through the Internet, the method comprising:
a) Producing a storage medium comprising at least a plurality of advertisement video files regarding suppliers' commodities;
b) Building the shopping server, which should comprise at least a plurality of commerce web pages, wherein at least a shopping web page can be downloaded to the electronic machine; the shopping web page further comprises at least a commodity selection zone for choosing desired items, which are provided with respective advertisement video files deposited in the storage medium; a film-playback zone providing a display area for playback related video files; a commodity specification zone for displaying detailed specifications of commodities obtained from the accessible shopping server or commodity supplier's server through hyperlink; and
c) Driving the browser in the client's end electronic machine to execute the shopping web page.

24. The method according to claim 23, wherein the storage medium is a Compact Disk (CD).

25. The method according to claim 23, wherein the storage medium is a Digital Versatile Disk (DVD).

26. The method according to claim 23, wherein the storage medium is a semi-conductor memory module.

27. The method according to claim 23, wherein the storage medium is a magnetic recording storage medium.

28. The method according to claim 23, wherein the storage medium is an optical recording storage medium.

29. A method for proceeding e-business by using storage media, requiring at least a plurality of client's end electronic machines, a shopping server, and a plurality of supplier's end commodity database servers for data access of the electronic machines or the shopping server through the Internet, the method comprising:
a) Producing a storage medium comprising at least: a plurality of advertisement video files regarding suppliers' commodities; a shopping web page having at least a commodity selection zone for displaying a variety of commodities, wherein each item of the commodities is provided with a corresponding advertisement video file in the storage medium; a film-playback zone for playback the advertisement video files; and a commodity specification zone for showing detailed data of commodities which are obtained through hyperlink to the accessible shopping server or the commodity database server;
b) Building the shopping server, which should comprise at least a plurality of commerce web pages for the client's end electronic machine to download and proceed orders; and
c) Driving the browser in the client's end electronic machine to execute the shopping web page.

30. The method according to claim 29, wherein the storage medium is a Compact Disk (CD).

31. The method according to claim 29, wherein the storage medium is a Digital Versatile Disk (DVD).

32. The method according to claim 29, wherein the storage medium is a semi-conductor memory module.

33. The method according to claim 29, wherein the storage medium is a magnetic recording storage medium.

34. The method according to claim 29, wherein the storage medium is an optical recording storage medium.

35. A storage medium readable by a computer, the storage medium comprising: a plurality of commodity advertisement video files for commodity selection when proceeding e-commerce instead of download from an e-commerce web site; a parameter pointing to a web address of shopping web page of the e-commerce web site; an autorun program code for running a browser basing on the parameter for browsing and executing the shopping web page.

36. The storage medium according to claim 35, wherein the storage media is a Compact Disk (CD).

37. The storage medium according to claim 35, wherein the storage media is a Digital Versatile Disk (DVD).

38. The storage medium according to claim 35, wherein the storage media is a semi-conductor storage medium.

39. The storage medium according to claim 35, wherein the storage media is a magnetic recording storage medium.

40. The storage medium according to claim 35, wherein the storage media is an optical recording storage medium.

41. A storage medium readable by a computer, the storage medium comprising:
a plurality of commodity advertisement video files for commodity selection when proceeding e-commerce instead of download from an e-commerce web site;
a shopping web page comprising at least: a commodity selection zone for displaying a variety of commodities, wherein each item of the commodities is provided with a corresponding advertisement video file in the storage medium; a film-playback zone for playback the advertisement video files; and a commodity specification zone for showing detailed data of commodities which are obtained through hyperlink to the accessible shopping server or the commodity database server; and
an autorun program code containing instruction for execution of a browser, which can be connected to the e-commerce web site through hypertext link by the browser executing the shopping page.

42. The storage medium according to claim 41, wherein the shopping web page further comprises a procurement zone for proceeding commodity orders.

43. The storage medium according to claim 41, wherein the storage media is a Compact Disk (CD).

44. The storage medium according to claim 41, wherein the storage media is a Digital Versatile Disk (DVD).

45. The storage medium according to claim 41, wherein the storage media is a semi-conductor storage medium.

46. The storage medium according to claim 41, wherein the storage media is a magnetic recording storage medium.

47. The storage medium according to claim 41, wherein the storage media is an optical recording storage medium.

48. An electronic machine for proceeding e-business by reading the storage medium described in claim 35, wherein the electronic machine connecting a shopping server and a plurality of supplier's end commodity database servers for data access of the electronic machines or the shopping server through the Internet, the electronic machine comprising:
a storage medium reading device; and
a browser to be run after the storage medium being loaded to the reading device,
wherein the electronic machine is to run the browser basing on the autorun program code of the storage medium to download a shopping web page, which further comprises: a commodity selection zone for displaying a variety of commodities,
wherein each item of the commodities is provided with a corresponding advertisement video file in the storage medium; a film-playback zone for playback the advertisement video files; and a commodity specification zone for showing detailed data of commodities which are obtained through hyperlink to the accessible shopping server or the commodity database server.

49. The electronic machine according to claim 48, wherein the shopping web page further comprises a procurement zone ― a display area for proceeding subscription process.

50. The electronic machine according to claim 48, wherein the electronic machine is an Information Appliance (IA).

51. The electronic machine according to claim 48, wherein the electronic machine is a computer.

52. The electronic machine according to claim 48, wherein the storage medium is a Compact Disk (CD), and the storage medium reading device is a CD driver.

53. The electronic machine according to claim 48, wherein the storage medium is a Digital Versatile Disk (DVD), and the storage medium reading device is a DVD driver.

54. The electronic machine according to claim 48, wherein the storage medium is a semi-conductor memory module.

55. The electronic machine according to claim 48, wherein the storage medium is a magnetic recording storage medium.

56. The electronic machine according to claim 48, wherein the storage medium is an optical recording storage medium.

57. An electronic machine for proceeding e-business by reading the storage medium described in claim 41, wherein the electronic machine connecting a shopping server and a plurality of supplier's end commodity database servers for data access of the electronic machines or the shopping server through the Internet, the electronic machine comprising:
a storage medium reading device; and
a browser to be run after the storage medium being loaded to the reading device,
wherein the electronic machine is to run the browser basing on an autorun program code to therefore execute the shopping web page of the storage medium and connect with the shopping server through hyperlink of the shopping web page.

58. The electronic machine according to claim 57, wherein the electronic machine is an Information Appliance (IA).

59. The electronic machine according to claim 57, wherein the electronic machine is a computer.

60. The electronic machine according to claim 57, wherein the storage medium is a Compact Disk (CD), and the storage medium reading device is a CD driver.

61. The electronic machine according to claim 57, wherein the storage medium is a Digital Versatile Disk (DVD), and the storage medium reading device is a DVD driver.

62. The electronic machine according to claim 57, wherein the storage medium is a semi-conductor memory module.

63. The electronic machine according to claim 57, wherein the storage medium is a magnetic recording storage medium.

64. The electronic machine according to claim 57, wherein the storage medium is an optical recording storage medium.
